Europäisches Patentamt

European Patent Office

Office européen des brevets

(19)

(11) Numéro de publication : **0 143 678**
**B1**

(12) **FASCICULE DE BREVET EUROPÉEN**

(45) Date de publication du fascicule du brevet :
04.03.87

(21) Numéro de dépôt : **84401903.4**

(22) Date de dépôt : **24.09.84**

(51) Int. Cl.⁴ : **B 60 N   1/08**

(54) **Dispositif de fixation amovible d'un siège sur un support tel qu'un plancher ou une structure de véhicule automobile.**

(30) Priorité : 28.11.83 FR 8318944

(43) Date de publication de la demande :
05.06.85 Bulletin 85/23

(45) Mention de la délivrance du brevet :
04.03.87 Bulletin 87/10

(84) Etats contractants désignés :
DE GB IT

(56) Documents cités :
FR-A- 2 497 587
FR-A- 2 500 383
GB-A-   605 951
US-A- 1 589 460
US-A- 1 717 336
US-A- 1 755 935

(73) Titulaire : **AUTOMOBILES PEUGEOT**
**75, avenue de la Grande Armée**
**F-75116 Paris (FR)**

**AUTOMOBILES CITROEN**
**62 Boulevard Victor-Hugo**
**F-92200 Neuilly-sur-Seine (FR)**

(72) Inventeur : **Levitre, Gilles**
**28 Chemin du Pont**
**F-92230 Gennevilliers (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

L'invention est relative aux dispositifs comprenant, pour fixer amoviblement un siège sur un support tel qu'un plancher ou une structure de véhicule automobile, au moins un moyen d'accrochage et au moins un moyen de verrouillage situés près de deux bords inférieurs opposés du siège.

Le ou chaque moyen d'accrochage comporte, solidaire de l'un des deux éléments, siège et support, une pièce saillante, notamment un doigt, (FR-A-2 500 383), dont l'extrémité est engagée dans un évidement délimité par une paroi horizontale de l'autre élément. Cette extrémité est introduite dans l'évidement par basculement ou translation horizontale du siège, et y est maintenue verticalement par coopération avec la face arrière de la paroi, c'est-à-dire la face tournée du côté opposé à l'élément muni de la pièce saillante.

Le ou chaque moyen de verrouillage comporte usuellement, pour assurer le maintien horizontal du siège et le maintien vertical du bord correspondant du siège, au moins un levier, ou une clavette, ou une pièce filetée, généralement peu accessibles, en particulier dans les véhicules automobiles, puisque situés sous le siège.

L'invention a pour but de réaliser un dispositif de fixation d'un siège sur un support, permettant un montage et un démontage rapides et aisés du siège.

L'invention se rapporte au dispositif de fixation connu, conformément au préambule de la revendication 1, et qui comprend, près d'un bord inférieur du siège, au moins un moyen d'accrochage à pièce saillante solidaire d'un des deux éléments constitués par le siège et le support, cette pièce saillante étant engagée dans un évidement de l'autre élément, et, au voisinage du bord inférieur opposé du siège, au moins un moyen de verrouillage.

Suivant l'invention, ce dispositif comporte au moins un moyen d'accrochage à pièce saillante supplémentaire, associé au moyen ou à l'un au moins des moyens de verrouillage, tous les moyens d'accrochage pouvant être mis en place par translation horizontale du siège dans un sens, et le ou chaque moyen de verrouillage comprend une butée coopérant avec la pièce saillante du moyen d'accrochage correspondant, de manière à l'empêcher de se déplacer dans le sens opposé audit sens de translation du siège, la butée étant élastiquement liée à l'élément dans lequel est formé l'évidement correspondant, de façon que ladite butée soit éclipsable perpendiculairement audit sens de translation du siège.

Selon d'autres caractéristiques avantageuses de l'invention :

chaque pièce saillante est un doigt dont l'extrémité forme une tête large, et chaque évidement est une lumière en forme de trou de serrure présentant une partie large et une partie rétrécie dirigée dans le sens de mise en place du doigt, ladite tête ayant une section transversale supérieure à celle de la partie rétrécie mais inférieure à celle de la partie large de la lumière ;

la butée est l'extrémité d'une lame élastique sensiblement horizontale fixée par son autre extrémité à une paroi de l'élément dans lequel est agencée la lumière et cette lame s'étend du côté de la paroi opposé au côté tourné vers l'élément muni du doigt, et au droit de la partie large de la lumière de manière à être poussée et écartée élastiquement par la tête lors de l'introduction du doigt dans la lumière ;

sur la lame est fixé un bouton-poussoir traversant la paroi avec un léger jeu ;

le doigt est solidaire d'une coulisse coopérant avec une glissière fixée au siège, et les lumières sont pratiquées dans le plancher ou la structure du véhicule ;

deux moyens d'accrochage étant prévus près de chacun de deux bords opposés du siège, un moyen de verrouillage est associé à chacun des deux moyens d'accrochage situés sur une même bordure;

la direction dans laquelle s'étend la partie rétrécie de chaque lumière est perpendiculaire au plan de symétrie du véhicule.

Un exemple de réalisation d'un dispositif de fixation d'un siège est décrit ci-après, avec référence aux dessins annexés, sur lesquels :

la Figure 1 est une vue simplifiée en élévation latérale, avec coupe partielle ;

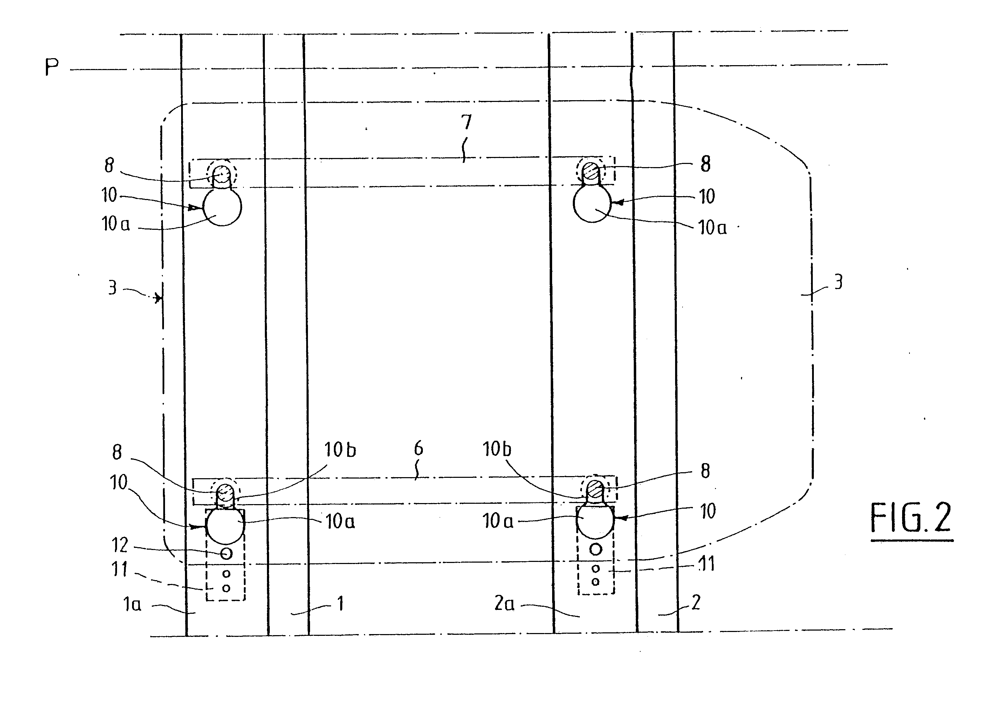

la Figure 2 est une vue de dessus, en coupe suivant la ligne II-II de la Figure 1 ;

la Figure 3 est une vue à plus grande échelle d'une partie du dispositif, en coupe suivant la ligne III-III de la Figure 1.

On voit sur les Figures, disposé sur deux traverses 1, 2 de la structure d'un véhicule, un siège 3 comportant deux glissières 4, 5 fixées respectivement près des deux bords latéraux inférieurs du siège 3. Ces glissières 4, 5 coopèrent de manière connue en soi avec des coulisses 6, 7 fixées à des parois horizontales supérieures 1a, 2a des traverses 1, 2, et qui permettent un réglage de la position longitudinale du siège 3 sur la structure.

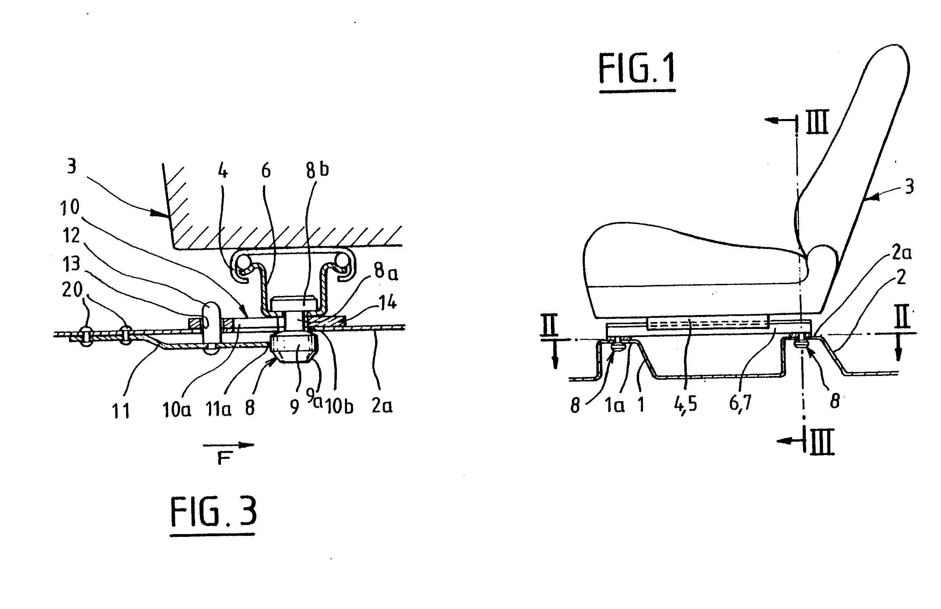

L'ensemble du siège 3 équipé des glissières 4, 5 et des coulisses 6, 7, peut être fixé aux traverses 1, 2 au moyen de quatre doigts 8 solidaires des extrémités des deux coulisses 6, 7 et constituant des pièces saillantes de moyens d'accrochage du siège 3 sur les traverses 1, 2. Chaque doigt 8 est tourné vers le bas, verticalement, et son extrémité inférieure porte une tête cylindrique large 9 à bout tronconique 9a reliée par une partie centrale cylindrique 8a de section inférieure, à une base 8b plus large, emprisonnée dans la coulisse associée 6, 7. Chaque doigt 8 est engagé dans l'une de quatre lumières 10 en forme de trou de serrure pratiquées dans la paroi supérieure horizontale 1a, 2a des traverses 1, 2, représentées sur la Figure 1 en coupe par un plan passant par l'axe de deux des doigts 8. Chaque lumière 10 présente une partie large 10a et une partie rétrécie 10b orientée transversalement au véhicule en direction de son plan de symétrie P, dans le sens d'introduction F du doigt 8. La partie rétrécie 10b est moins large que la tête 9 dont la section transversale est plus petite que la partie large 10a de la lumière 10, partie par laquelle la tête 9 peut donc traverser la paroi 1a, 2a.

A proximité de chacune des lumières 10 associées aux doigts 8 de la coulisse 6 la plus éloignée du plan de symétrie P du véhicule, donc située du côté de l'accès au siège 3, est fixée à la paroi supérieure 1a, 2a de la traverse 1, 2, sous cette paroi et du côté opposé à la partie rétrécie 10b de la lumière 10, un moyen de verrouillage du doigt 8 dans la lumière 10 et par conséquent du siège 3 sur les traverses 1, 2. Ce moyen est formé, dans l'exemple décrit, par une lame élastique 11 s'étendant à peu près horizontalement jusque sous la partie élargie 10a de la lumière 10, tandis que son extrémité libre 11a est placée latéralement contre la tête 9 quand le siège 3 est, comme visible sur les Figures, en position d'utilisation. Le doigt 8 est alors maintenu prisonnier dans la partie mince 10b de la lumière 10, l'extrémité 11a de la lame 11 constituant une butée pour le doigt 8, l'empêchant ainsi que le siège 3 de se déplacer transversalement vers l'extérieur du véhicule.

La lame 11 est fixée à la paroi 1a, 2a, par exemple par des rivets d'extrémité 20, et peut s'écarter élastiquement de la paroi.

Un bouton-poussoir vertical 12 est fixé à la lame 11 et traverse la paroi 1a, 2a par un trou 13 de plus grande dimension que la section du bouton-poussoir, de sorte que celui-ci se déplace librement, avec un léger jeu, quand la lame 11 oscille verticalement. Une plaque de renfort 14 est soudée sur la paroi 1a, 2a au voisinage de la lumière 10 et du trou 13 et est ajourée comme la paroi 1a, 2a.

Le montage du siège 3 équipé des glissières 4, 5, et des coulisses 6, 7 munies des doigts 8 s'effectue comme suit :

On présente simultanément les quatre doigts 8 en face de la partie large 10a des lumières 10 correspondantes. Cette partie étant de plus grande dimension que la tête 9, celle-ci s'y engage facilement grâce à son bout tronconique 9c, et le siège 3 s'abaissant par son poids jusqu'à porter sur les traverses 1, 2, les doigts 8 de la coulisse 6 poussent vers le bas les deux lames 11.

Le siège 3 est ensuite déplacé en translation transversale vers le plan de symétrie P du véhicule, dans le sens F de mise en place, la partie de chaque doigt 8 située sous la tête 9 s'engageant dans la partie étroite 10b de la lumière 10. Le siège 3 atteignant sa position d'utilisation représentée sur les Figures, chaque lame 11 reprend par élasticité sa position sensiblement horizontale dans laquelle son extrémité 11a forme une butée latérale pour la tête 9 associée, immobilisant le siège 3 transversalement tandis que celui-ci est immobilisé verticalement par coopération du bord supérieur de chaque tête 9 avec la face inférieure de la paroi 1a, 2a autour de la partie étroite 10b de la lumière correspondante 10.

Pour démonter le siège 3, il suffit d'appuyer sur les boutons-poussoirs 12 pour abaisser les deux lames 11, éclipsant ainsi perpendiculairement à la flèche F la butée que forme leur extrémité 11a, puis de déplacer transversalement le siège 3 de manière à présenter les doigts 8 au droit de la partie large 10a de la lumière 10 correspondante, et enfin de soulever le siège de manière à dégager des lumières 10 les têtes 9. Ce démontage s'avère, ainsi que le montage, particulièrement rapide et aisé.

En variante, les lumières peuvent avoir leur partie étroite orientée dans une autre direction commune, par exemple vers l'avant du siège, les moyens de verrouillage tels que ceux à lame 11 susmentionnés étant alors disposés à l'arrière du siège, Par ailleurs, les deux moyens de verrouillage tels que 11 peuvent être disposés près de deux coins inférieurs opposés du siège, ou bien un seul moyen de verrouillage au lieu de deux peut être prévu, la lumière correspondante étant alors de préférence située vers le milieu d'un des bords inférieurs du siège. Les doigts peuvent être solidaires du support, dirigés vers le haut, coopérant comme indiqué ci-dessus avec des lumières, pratiquées cette fois dans une partie basse du siège, notamment dans la paroi inférieure des coulisses 6, 7. Enfin, les doigts peuvent être non pas circulaires mais plats, réalisés notamment en tôle, et engagés, par translation horizontale du siège, dans des logements en partie délimités par une portion de paroi horizontale de l'élément correspondant et/ou d'une pièce qui en est solidaire.

**Revendications**

1. Dispositif de fixation amovible d'un siège (3) sur un support tel qu'un plancher ou une structure (1, 2) de véhicule automobile, comprenant, près d'un bord inférieur du siège (3), au moins un moyen d'accrochage à pièce saillante (8) solidaire d'un des deux éléments constitués par le siège (3) et le support (1, 2), cette pièce saillante (8) étant engagée dans un évidement (10) de l'autre élément et, au voisinage du bord inférieur opposé du siège, au moins un moyen de verrouillage (11), caractérisé en ce qu'il comporte au moins un moyen d'accrochage à pièce saillante supplémentaire (8), associé au moyen ou à l'un au moins des moyens de verrouillage, tous les moyens d'accrochage pouvant être mis en place par translation horizontale du siège (3) dans un sens, et en ce que le ou chaque moyen de verrouillage comprend une butée (11a) coopérant avec la pièce saillante (8) du moyen d'accrochage correspondant, de manière à l'empêcher de se déplacer dans le sens opposé audit sens de translation du siège, la butée (11a) étant élastiquement liée à l'élément (1, 2) dans lequel est formé l'évidement (10) correspondant, de façon que ladite butée soit éclipsable perpendiculairement audit sens de translation du siège.

2. Dispositif selon la revendication 1, caractérisé en ce que chaque pièce saillante est un doigt (8) dont l'extrémité forme une tête élargie (9), et chaque évidement (10) est une lumière en forme de trou de serrure, présentant une partie large (10a) et une partie rétrécie (10b) dirigée dans le sens (F) de mise en place du doigt (8), ladite tête (9) ayant une section transversale supérieure à celle de la partie rétrécie (10b) mais inférieure à celle de la partie large (10a) de la lumière (10).

3. Dispositif selon la revendication 1 ou 2, caractérisé en ce que la butée (11a) constitue l'extrémité d'une lame élastique (11) sensiblement horizontale, fixée par son autre extrémité à une paroi (1a, 2a) de l'élément (1, 2) dans lequel est agencée la lumière (10), et cette lame (11) s'étend du côté de la paroi (1a, 2a) opposé au côté tourné vers l'élément (6, 7) muni du doigt (8) et au droit de la partie large (10a) de la lumière (10), de manière à être poussée et écartée élastiquement par la tête (9) lors de l'introduction du doigt (8) dans la lumière (10).

4. Dispositif selon la revendication 3, caractérisé en ce qu'un bouton-poussoir (12) traversant la paroi (1a, 2a) avec un léger jeu est fixé sur la lame élastique (11).

5. Dispositif selon l'une des revendications 1 à 4, caractérisé en ce que le doigt (8) est solidaire d'une coulisse (6, 7) coopérant avec une glissière du siège, et les lumières (10) sont agencées dans le plancher ou la structure du véhicule.

6. Dispositif selon l'une des revendications 1 à 5, caractérisé en ce qu'il comporte deux moyens d'accrochage (8) près de chacun des deux bords inférieurs opposés du siège (3), et un moyen de verrouillage (11) associé à chacun des deux moyens d'accrochage (8) situés sur un même bord du siège (3).

7. Dispositif selon l'une des revendications 2 à 6, caractérisé en ce que la partie rétrécie (10b) de chaque lumière (10) s'étend dans une direction perpendiculaire au plan de symétrie (P) du véhicule.

**Claims**

1. A device for detachably fixing a seat structure (3) on a support such as a floor or a structure (1, 2) of a motor vehicle, comprising, close to a lower edge of the seat structure (3), at least one hooking means having a projecting member (8) connected to one of two elements constituted by the seat structure (3) and the support (1, 2), this projecting member (8) being engaged in a cavity (10) in the other element and, in the vicinity of the opposite lower edge of the seat structure, at least one locking means (11), characterised in that it comprises at least one hooking means having an additional projecting member (8) associated with the locking means or at least one of the locking means, all the hooking means being capable of being put in position by a horizontal translation of the seat structure (3) in one direction, and the or each locking means comprises an abutment (11a)

cooperating with the projecting member (8) of the corresponding hooking means so as to prevent it from moving in the direction opposed to said direction of translation of the seat structure, the abutment (11a) being elastically connected to the element (1, 2) in which the corresponding cavity (10) is provided, so that said abutment is retractable in a direction perpendicular to said direction of translation of the seat structure.

2. A device according to claim 1, characterised in that each projecting member is a pin (8) whose end forms an enlarged head (9), each cavity (10) is an opening of key-hole shape, having a large part (10a) and a narrowed part (10b) oriented in the direction (F) of the positioning of the pin (8), said head (9) having a cross-section larger than that of the narrowed part (10b) but smaller than that of the large part (10a) of the opening (10).

3. A device according to claim 1 or 2, characterised in that the abutment (11a) constitutes the end of an elastic strip (11) which is substantially horizontal and fixed by its other end to a wall (1a, 2a) of the element (A) in which the opening (10) is provided, and this strip (11) extends from the side of the wall (1a, 2a) opposed to the side facing toward the elements (6, 7) provided with the pin (8) and in alignment with the large part (10a) of the opening (10) so as to be urged and elastically moved away by the head (9) when the pin (8) is inserted in the opening (10).

4. A device according to claim 3, characterised in that a push-button (12) extending through the wall (1a, 2a) with a slight clearance is fixed to the elastic strip (11).

5. A device according to one of the claims 1 to 4, characterised in that the pin (8) is connected to a slide (6, 7) cooperating with a slideway of the seat structure, and the openings (10) are provided in the floor or the structure of the vehicle.

6. A device according to one of the claims 1 to 5, characterised in that it comprises two hooking means (8) close to each of the two lower opposed edges of the seat structure (3), and a locking means (11) associated with each of the two hooking means (8) located on the same edge of the seat structure (3).

7. A device according to one of the claims 2 to 6, characterised in that the narrowed part (10b) of each opening (10) extends in a direction perpendicular to the plane of symmetry (P) of the vehicle.

**Patentansprüche**

1. Vorrichtung zur lösbaren Befestigung eines Sitzes (3) auf einem Träger wie etwa einem Boden oder einem Aufbau (1, 2) eines Kraftfahrzeuges, welche nahe einer Unterkante des Sitzes (3) wenigstens eine Einhängeinrichtung mit vorspringendem Teil (8), welche mit dem einen der beiden durch den Sitz (3) und den Träger (1, 2) gebildeten Elemente fest verbunden ist, wobei dieses vorspringende Teil (8) in einer Ausnehmung (10) des anderen Elements in Eingriff ist, und im Bereich der gegenüberliegenden Unterkante des Sitzes wenigstens eine Verriegelungseinrichtung (11) aufweist, dadurch gekennzeichnet, daß sie zugeordnet zu der Verriegelungseinrichtung oder der wenigstens einen der Verriegelungseinrichtungen wenigstens eine zusätzliche Einhängeeinrichtung mit vorspringendem Teil (8) aufweist, wobei alle Einhängeinrichtungen durch horizontale Verschiebung des Sitzes (3) in einer Richtung in Stellung gebracht werden können, und daß die oder jede Verriegelungseinrichtung einen Anschlag (11a) aufweist, welcher mit dem vorspringenden Teil (8) der entsprechenden Einhängeinrichtung so zusammenwirkt, daß dieses gehindert ist, sich in der zur Verschiebungsrichtung des Sitzes entgegengesetzten Richtung zu verschieben, wobei der Anschlag (11a) mit dem Element (1, 2), in welchem die entsprechende Ausnehmung (10) ausgebildet ist, elastisch verbunden ist, derart, daß der Anschlag senkrecht zur Verschiebungsrichtung des Sitzes einziehbar ist.

2. Vorrichtung nach Anspruch 1, dadurch gekennzeichnet, daß jedes vorspringende Teil ein Finger (8), dessen Ende einen vergrößerten Kopf (9) ausbildet, und jede Ausnehmung (10) ein schlüssellochförmiges Langloch, welches einen weiten Teil (10a) und einen in Richtung (F) des Instellungbringens des Fingers (8) gerichteten verengten Teil (10b) aufweist, ist, wobei der Kopf (9) einen über demjenigen des verengten Teils (10b) aber unter demjenigen des weiten Teils (10a) des Langloches (10) liegenden Querschnitt hat.

3. Vorrichtung nach Anspruch 1 oder 2, dadurch gekennzeichnet, daß der Anschlag (11a) das Ende einer im wesentlichen horizontalen elastischen Lamelle (11) bildet, welche über ihr anderes Ende an einer Wand (1a, 2a) des Elements (1, 2), in welchem das Langloch (10) angeordnet ist, befestigt ist, und daß diese Lamelle (11) sich auf der Seite der Wand (1a, 2a), welche der dem mit dem Finger (8) versehenen Element (6, 7) zugekehrten Seite entgegengesetzt ist, und am weiten Teil (10a) des Langloches (10) erstreckt, derart, daß sie beim Einführen des Fingers (8) in das Langloch (10) durch den Kopf (9) gedrückt und elastisch beiseite geschoben wird.

4. Vorrichtung nach Anspruch 3, dadurch gekennzeichnet, daß ein Druckknopf (12), welcher die Wand (1a, 2a) mit einem leichten Spiel durchsetzt, an der elastischen Lamelle (11) befestigt ist.

5. Vorrichtung nach einem der Ansprüche 1 bis 4, dadurch gekennzeichnet, daß der Finger (8) mit einer mit einer Gleitschiene des Sitzes zusammenwirkenden Gleitführung (6, 7) fest verbunden ist, und daß die Langlöcher (10) in dem Boden oder dem Aufbau des Fahrzeugs angeordnet sind.

6. Vorrichtung nach einem der Ansprüche 1 bis 5, dadurch gekennzeichnet, daß sie zwei Einhängeinrichtungen (8) an jeder der beiden gegenüberliegenden Unterkanten des Sitzes (3) und, zugeordnet zu jeder auf der gleichen Kante des Sitzes (3) liegenden Einhängeinrichtung (8), eine Verriegelungseinrichtung (11) aufweist.

7. Vorrichtung nach einem der Ansprüche 2 bis 6, dadurch gekennzeichnet, daß der verengte Teil (10b) eines jeden Langloches (10) sich in einer zur Symmetrieebene (P) des Fahrzeugs senkrechten Richtung erstreckt.

FIG. 3

FIG. 1

0 143 678

FIG.2